# EUROPEAN PATENT SPECIFICATION

(11) **EP 0 943 236 B1**
(45) Date of publication and mention of the grant of the patent: **03.09.2003**
(21) Application number: 99201585.9
(22) Date of filing: 19.05.1998
(51) Int. Cl.: A01K 5/00, A01F 25/20, A01F 29/00

(54) **A method and a device for mixing fodder**
Vorrichtung und Verfahren um Tierfutter zu mischen
Méthode et appareil pour mélanger du fourage

(30) Priority: 30.05.1997 NL 1006170
(43) Date of publication of application: 22.09.1999
(62) Divisional of application: 98201665.1
(73) Proprietor: Trioliet Mullos B.V., 7575 BE Oldenzaal (NL)
(72) Inventor: Van der Plas Nicolaas, 7576 WB Oldenzaal (NL)
(74) Representative: de Vries, Johannes Hendrik Fokke

(56) References cited:
- EP-A- 0 706 755
- DE-A- 19 615 531
- DE-U- 29 716 599
- DE-U- 29 719 753
- GB-A- 2 122 480
- GB-A- 2 243 593

## Description

The invention relates to a device for mixing and loosening fodder, which device is provided with a mixing chamber comprising one or more mixing units, which are rotatable about substantially vertical axes, and a side wall, which is at least partially curved, seen in horizontal sectional view, which side wall is provided with an opening, which device is furthermore provided with a loading unit for introducing the material to be mixed into the mixing chamber through said opening, the device comprises a loading unit, which can pivot between a first position near the floor on which the device is present, and a second position, wherein the loading unit at least partially closes the opening. A device of this kind is usually mobile, wherein the device can be filled with the material to be mixed at the location where a stock of said material is present, whilst the mixing and loosening of said material can take place during the transport from said location to the location where the mixed fodder is to be delivered, for example in a stable where the cattle to be fed are present.

GB-A-2122480 discloses a shredding device having a cylindrical receiver 113 with a drum below the bottom of the receiver. The receiver is split on a diametrical vertical plane into two halves, a rear hinged portion and a forward fixed portion. The hinged portion is pivoted about a transverse horizontal axis and can be lowered to an open position.

EP-A-0 706 755 discloses a device according to the preamble of claim 1. In this known device the loading unit is a straight rear wall part.

Such a device may be self-propelled, wherein the device comprises driving means for moving the device. The device may also be provided with wheels and with means for being coupled to a tractor, whilst it is possible to construct the device so that it can be hitched to the three-point linkage of a tractor.

The object of the invention is to provide a device and a method wherein the fodder can be produced in an efficient manner in that the material of which the fodder is composed is loosened and mixed in an effective and efficient manner.

According to the invention said opening has a curved lower edge, and wherein said loading unit is provided with a corresponding curved edge, which is substantially contiguous to said lower edge of the opening in said second position. The presence of places in the mixing chamber where the material can readily accumulate without taking part in the mixing process is prevented by configuring the edge of the loading unit as well as the lower edge of the opening as curved edges.

Preferably, the loading unit is capable of pivoting movement about a pivot axis which extends substantially transversely to the direction of movement of the device, wherein the loading unit comprises a substantially straight wall on the side remote from the pivot axis, which wall can be moved to a position on the floor.

Preferably a guide wall is present, which joins at least part of the aforesaid curved lower edge of the opening, wherein the shape of at least part of said guide wall substantially corresponds with at least part of the path in which said curved edge of the loading unit moves during its pivoting movement. The loading unit may thereby pivot about a pivot axis which is positioned near the bottom of the mixing chamber. The pivot axis may also be positioned so that it substantially intersects the lower edge of the opening, preferably near the part of the lower edge that is located furthest to the outside, seen from the mixing chamber.

The pivot axis may also be positioned so that it intersects said lower edge near two spaced-apart locations on the curved lower edge, wherein the loading unit is provided between said locations with a guide wall, whose shape at least partially corresponds with at least part of the path in which the part of the lower edge which is present between said two locations moves with respect to the loading unit. Unlike the guide wall referred to before, this guide wall can be moved together with the loading unit.

Further aspects of the invention are disclosed in the description of the figures and/or defined in the claims. Said aspects may be used separately as well as in combination with each other.

The invention will be explained in more detail hereafter with reference to the drawing, which shows a few embodiments of devices for mixing fodder.
Figures 1 - 4 show an embodiment of a device for mixing fodder;
Figures 5 - 8 show another embodiment of a device for mixing fodder.

The figures are merely diagrammatic illustrations, wherein corresponding parts are indicated by the same numerals.

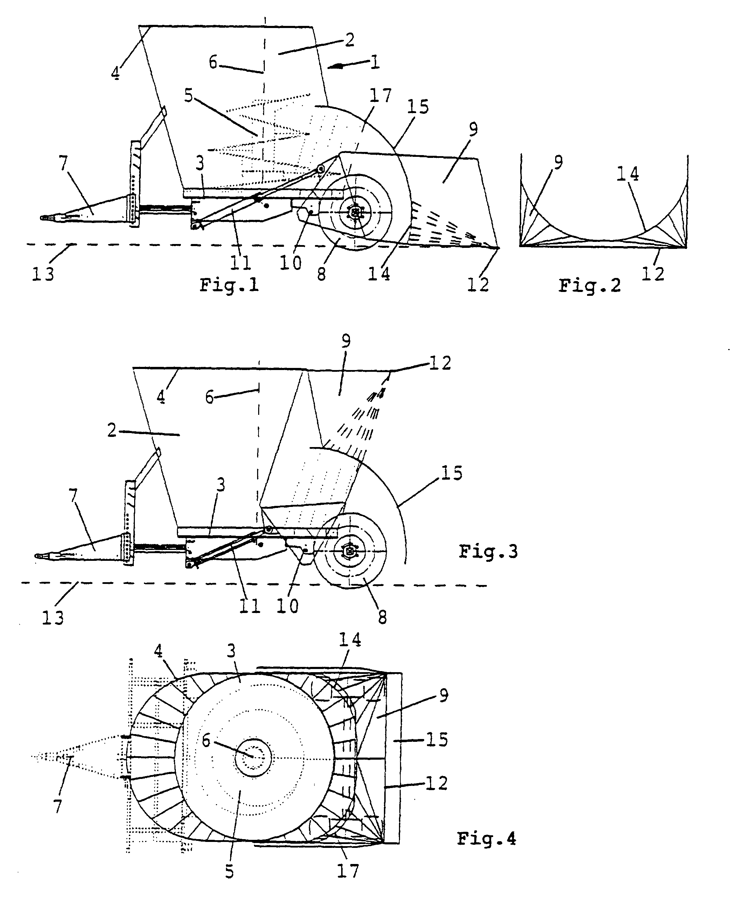

Figure 1 shows a device for mixing fodder in side view. The device comprises a mixing chamber 1 with a side wall 2, which is curved to have an approximately circular shape, seen in plan view, and which diverges in upward direction. The diameter of the mixing chamber near bottom 3 is smaller than near upper edge 4, therefore.

A mixing unit 5, illustrated in dotted lines, is present in the mixing chamber, which mixing unit is capable of rotation about a substantially vertical axis 6. The mixing unit comprises a spirally formed mixing paddle.

The device furthermore comprises means 7 for hitching the device to a tractor, which means 7 may be of a construction which is known per se. The device furthermore comprises two wheels 8, so that the device can be drawn when it is hitched to a tractor.

The device is provided with a loading unit 9, which is capable of pivoting movement about a axis 10 positioned near the bottom 3 of mixing chamber 1, which loading unit functions to fill mixing chamber 1 with material to be mixed. The pivoting of loading unit 9 is controlled by means of hydraulic cylinder 11. Figure 1 shows loading unit 9 to have pivoted downwards, so that a straight edge 12 has been positioned near floor 13, so that the material to be mixed can easily be placed on loading unit 9.

Figure 2 shows loading unit 9 in rear view, wherein the curved edge 14 can be distinguished, which curved edge moves along a guide plate 15 upon pivoting of loading unit 9.

When material has been moved onto loading unit 9 and said loading unit 9 is pivoted upwards about pivot axis 10, the material will fall into mixing chamber 1 upon reaching opening 16 in wall 2 of the mixing chamber, which opening 16 has a curved lower edge 17, which edge joins guide plate 15. Seen in plan view, said lower edge 17 is curved, as is shown in Figure 4.

In the situation which is shown in Figure 3, the loading unit 9 has been moved to its highest position, in which it joins the curved side wall 2 of the mixing chamber. Since side wall 2 and loading unit are both curved, with said curves being contiguous to each other, the mixing chamber does not comprise any so-called lost spaces, in which material can accumulate and in which the mixing intensity is lower than in the other parts of the mixing chamber. The curved shape of loading unit 9 is indicated in dashed lines in Figures 1 and 3.

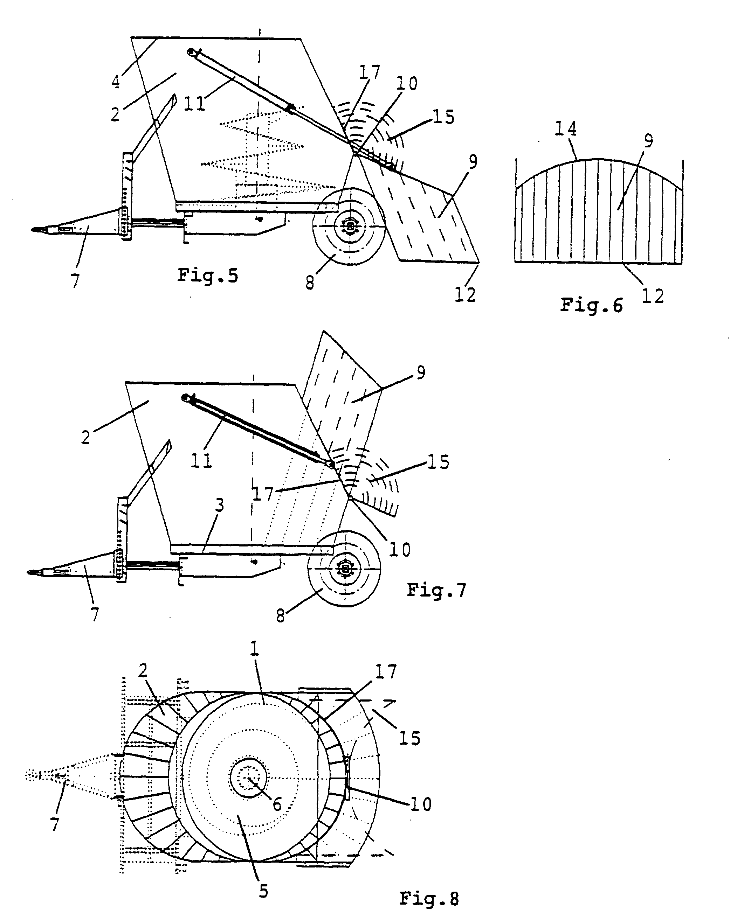

Figure 5 shows another embodiment of a mixing device in side view. The difference with the device described before is the construction of the loading unit 9. In this embodiment loading unit 9 pivots about a pivot axis 10 which is positioned in side wall 2 of mixing chamber 1. Also in this embodiment loading unit 9 has a straight edge 12 and a curved edge 14, which curved edge 14 is capable of joining the curved lower edge 17 of the opening in side wall 2, through which material is introduced into the mixing chamber. The guide plate 15 of this embodiment, which is three-dimensionally curved, is illustrated in dashed lines in Figures 5, 7 and 8. The curved edge 14 of loading unit 9 moves along the surface of guide plate 15.

## Claims

1. A device for mixing and loosening fodder, which device is provided with a mixing chamber (1) comprising one or more mixing units (5), which are rotatable about substantially vertical axes (6), and a side wall (2), which is at least partially curved, seen in horizontal sectional view, which side wall (2) is provided with an opening, which device is furthermore provided with a loading unit (9) for introducing the material to be mixed into the mixing chamber (1) through said opening, which loading unit (9) can pivot between a first position near the floor (13) on which the device is present, and a second position, wherein the loading unit (9) at least partially closes the opening, wherein said opening has a curved lower edge (17), **characterised in that** said loading unit (9) is provided with a corresponding curved edge (14), which is substantially contiguous to said lower edge (17) of the opening in said second position.

2. A device according to claim 1, **characterized by** wheels (8) and/or means (7) for hitching the device to a tractor.

3. A device according to any one of the preceding claims, **characterized in that** the loading unit (9) is capable of pivoting movement about a pivot axis (10) which extends substantially transversely to the direction of movement of the device.

4. A device according to any one of the preceding claims, **characterized in that** the side wall (2) diverges in upward direction.

5. A device according to any one of the preceding claims, **characterized in that** the loading unit (9) has a substantially straight edge (12) of the side remote from its pivot axis (10).

6. A device according to claim 5, charaterized in that said substantially straight edge (12) of the loading unit (9) can be moved to a position near the floor (13).

7. A device according to any one of the preceding claims, **characterized in that** a guide wall (15) is present, which joins at least part of the aforesaid curved lower edge (17) of the opening, wherein the shape of at least part of said guide wall (15) substantially corresponds with at least part of the path in which said curved edge (14) of the loading unit (9) moves during its pivoting movement.

8. A device according to any one of the preceding claims, **characterized in that** the loading unit (9) pivots about a pivot axis (10) which is positioned near the bottom of the mixing chamber (1).

9. A device according to any one of the claims 1-7, **characterized in that** the loading unit (9) pivots about a pivot axis (10) which substantially intersects the aforesaid curved lower edge (17) of the opening.

10. A device according to claim 9, **characterized in that** the pivot axis (10) intersects the lower edge (14) near the part of the lower edge (14) that is located furthest to the outside, seen from the mixing chamber (1).

11. A device according to claim 9, **characterized in that** the pivot axis (10) intersects said lower edge (14) near two spaced-apart locations on the curved lower edge (17), wherein the loading unit (9) is provided between said locations with a guide wall (15), whose shape at least partially corresponds with at least part of the path in which the part of the lower edge (17) which is present between said two locations moves with respect to the loading unit (9).

12. A method for mixing and loosening fodder in a mixing chamber (1) comprising one or more mixing units (5), which are rotatable about substantially vertical axes (6), and a side wall (2), which is at least partially curved, seen in horizontal sectional view, which side wall (2) is provided with an opening, wherein material to be mixed is introduced into the mixing chamber (1) through said opening by causing a loading unit (9) to pivot between a first position near the floor (13) on which the device is present, and a second position, wherein the loading unit (9) at least partially closes the opening, wherein said opening has a curved lower edge (14), and wherein said loading unit (9) is provided with a corresponding curved edge (14), which is substantially contiguous to said lower edge (17) of the opening in said second position.

13. A method according to claim 12, **characterized in that** the device is provided with wheels and/or with means for hitching the device to a tractor, and wherein the loading unit (9) pivots about a pivot axis (10) which extends substantially transversely to the direction of movement of the device, wherein the device is reversed to a position near a stock of material to be mixed, wherein the loading unit (9), which comprises a substantially straight edge (12), is pivoted so that said edge (12) is positioned near the floor (13).

14. A method according to claim 12 or 13, **characterized in that** the loading unit (9) is moved with its curved edge (14) along a guide wall (15) during said pivoting movement, which guide wall (15) joins at least part of the aforesaid curved lower edge (17) of the opening.

15. A method according to any of claims 12-14, **characterized in that** the loading unit (9) is pivoted about a pivot axis (10) which is positioned near the bottom side of the mixing chamber (1).

## Patentansprüche

1. Vorrichtung zum Mischen und Auflockern von Futter, welche Vorrichtung mit einer Mischkammer (1) versehen ist, die eine oder mehrere Mischeinheiten (5) umfasst, die um im wesentlichen vertikale Achsen (6) drehbar sind, und eine Seitenwand (2) umfasst, die - in einer horizontalen Schnittansicht betrachtet - wenigstens teilweise gebogen ist, welche Seitenwand (2) mit einer Öffnung versehen ist, welche Vorrichtung ferner mit einer Ladeeinheit (9) versehen ist zur Einführung des zu mischenden Materials durch die Öffnung in die Mischkammer (1), welche Ladeeinheit (9) zwischen einer ersten Position nahe des Bodens (13), auf dem die Vorrichtung vorhanden ist, und einer zweiten Position, in der die Ladeeinheit (9) wenigstens teilweise die Öffnung verschließt, schwenkbar ist, **dadurch gekennzeichnet, dass** die Öffnung eine gebogene untere Kante (17) besitzt und dass die Ladeeinheit (9) mit einer entsprechenden gebogenen Kante (14) versehen ist, die im wesentlichen fortlaufend zu der unteren Kante (17) der Öffnung in der zweiten Position ist.

2. Vorrichtung nach Anspruch 1, **gekennzeichnet durch** Räder (18) und/oder Mittel (7) zum Anbau der Vorrichtung an einen Traktor.

3. Vorrichtung nach irgendeinem der vorhergehenden Ansprüche, **dadurch gekennzeichnet, dass** die Ladeeinheit (9) fähig zur Schwenkbewegung um eine Schwenkachse (10) ist, die sich im wesentlichen quer zu der Bewegungsrichtung der Vorrichtung erstreckt.

4. Vorrichtung nach irgendeinem der vorhergehenden Ansprüche, **dadurch gekennzeichnet, dass** die Seitenwand (2) in Aufwärtsrichtung auseinander geht.

5. Vorrichtung nach irgendeinem der vorangehenden Ansprüche, **dadurch gekennzeichnet, dass** die Ladeeinheit (9) eine im wesentlichen gerade Kante (12) an der von der Schwenkachse (10) entfernten Seite besitzt.

6. Vorrichtung nach Anspruch 5, **dadurch gekennzeichnet, dass** die im wesentlichen gerade Kante (12) der Ladeeinheit (9) in eine Position nahe an dem Boden (13) bewegt werden kann.

7. Vorrichtung nach irgendeinem der vorhergehenden Ansprüche, **dadurch gekennzeichnet, dass** eine Führungswand (15) vorliegt, welche wenigstens einen Teil der zuvor erwähnten gebogenen unteren Kante (17) der Öffnung verbindet, wobei die Form wenigstens eines Teiles der Führungswand (15) im wesentlichen wenigstens einem Teil der Wegstrecke entspricht, auf der sich die gebogene Kante (14) der Ladeeinheit (9) während ihrer Schwenkbewegung bewegt.

8. Vorrichtung nach irgendeinem der vorhergehenden Ansprüche, **dadurch gekennzeichnet, dass** die Ladeeinheit (9) um eine Schwenkachse (10) schwenkt, welche nahe des Bodens der Mischkammer (1) positioniert ist.

9. Vorrichtung nach irgendeinem der Ansprüche 1 bis 7, **dadurch gekennzeichnet, dass** die Ladeeinheit (9) um eine Schwenkachse (10) schwenkt, welche im wesentlichen die zuvor erwähnte gebogene untere Kante (17) der Öffnung schneidet.

10. Vorrichtung nach Anspruch 9, **dadurch gekennzeichnet, dass** die Schwenkachse (10) die untere Kante (14) nahe des Teiles der unteren Kante (14) schneidet, der am weitesten von der Außenseite - betrachtet von der Mischkammer (1) - angeordnet ist.

11. Vorrichtung nach Anspruch 9, **dadurch gekennzeichnet, dass** die Schwenkachse (10) die untere Kante (14) in der Nähe von zwei voneinander beabstandeten Orten auf der gebogenen unteren Kante (17) schneidet, wobei die Ladeeinheit (9) zwischen den Orten mit einer Führungswand (15) versehen ist, deren Form wenigstens teilweise dem Teil der Wegstrecke entspricht, auf der sich der Teil der unteren Kante (17), die zwischen den zwei Orten vorliegt, in Bezug auf die Ladeeinheit (9) bewegt.

12. Verfahren zum Mischen und Auflockern von Futter in einer Mischkammer (1), die eine oder mehrere Mischeinheiten (5), welche um im wesentlichen vertikalen Achsen (6) drehbar sind, und eine Seitenwand (2) umfasst, die - in einer horizontalen Schnittansicht betrachtet - wenigstens teilweise gebogen ist, welche Seitenwand (2) mit einer Öffnung versehen ist, wobei zu mischendes Material in die Mischkammer (1) durch die Öffnung eingeführt wird, in dem eine Ladeeinheit (9) zum Schwenken zwischen einer ersten Position nahe des Bodens (13), auf dem die Vorrichtung vorhanden ist, und einer zweiten Position, in der die Ladeeinheit (9) wenigstens teilweise die Öffnung verschließt, veranlasst wird, wobei die Öffnung eine gebogene untere Kante (14) besitzt und wobei die Ladeeinheit (9) mit einer entsprechenden gebogenen Kante (14) versehen ist, welche im wesentlichen fortlaufend zu der unteren Kante (17) der Öffnung in der zweiten Position ist.

13. Verfahren nach Anspruch 12, **dadurch gekennzeichnet, dass** die Vorrichtung mit Rädern und/oder mit Mitteln zum Anbau der Vorrichtung an einen Traktor versehen ist, und wobei die Ladeeinheit (9) um eine Schwenkachse (10) schwenkt, die sich im wesentlichen quer zu der Bewegungsrichtung der Vorrichtung erstreckt, wobei die Vorrichtung in eine Position nahe eines zu mischenden Materialvorrates zurückgeführt wird, wobei die Ladeeinheit (9), welche im wesentlichen eine gerade Kante (12) umfasst, geschwenkt wird, so dass die Kante (12) nahe des Bodens (13) positioniert ist.

14. Verfahren nach Anspruch 12 oder 13, **dadurch gekennzeichnet, dass** die Ladeeinheit (9) mit ihrer gebogenen Kante (14) entlang einer Führungswand (15) während der Schwenkbewegung bewegt wird, welche Führungswand (15) sich wenigstens an einen Teil der zuvor erwähnten gebogenen unteren Kante (17) der Öffnung anfügt.

15. Verfahren nach irgendeinem der Ansprüche 12 - 14, **dadurch gekennzeichnet, dass** die Ladeeinheit (9) um eine Schwenkachse (10) geschwenkt wird, die nahe der Unterseite der Mischkammer (1) angeordnet ist.

## Revendications

1. Appareil de mélange et de dispersion de fourrage, ledit appareil étant équipé d'une chambre de mélange (1) comprenant une ou plusieurs unité(s) de mélange (5) pouvant tourner autour d'axes (6) sensiblement verticaux, et une paroi latérale (2) au moins partiellement curviligne observée en coupe transversale horizontale, laquelle paroi latérale (2) est munie d'un orifice, ledit appareil étant par ailleurs équipé d'une unité de chargement (9) pour introduire le matériau à mélanger, dans la chambre de mélange (1), à travers ledit orifice, ladite unité de chargement (9) pouvant pivoter entre une première position proche du sol (13) sur lequel l'appareil est disposé, et une seconde position dans laquelle l'unité de chargement (9) obture au moins partiellement l'orifice, **caractérisé par le fait que** ledit orifice possède un bord inférieur arqué (17) ; et **par le fait que** ladite unité de chargement (9) est dotée d'un bord arqué (14) correspondant, sensiblement contigu audit bord inférieur (17) de l'orifice dans ladite seconde position.

2. Appareil selon la revendication 1, **caractérisé par** des roues (8) et/ou des moyens (7) pour atteler ledit appareil à un tracteur.

3. Appareil selon l'une quelconque des revendications précédentes, **caractérisé par le fait que** l'unité de chargement (9) peut accomplir un mouvement pivotant autour d'un axe de pivotement (10) qui s'étend, pour l'essentiel, transversalement par rapport à la direction de mouvement dudit appareil.

4. Appareil selon l'une quelconque des revendications précédentes, **caractérisé par le fait que** la paroi latérale (2) diverge vers le haut.

5. Appareil selon l'une quelconque des revendications précédentes, **caractérisé par le fait que** l'unité de chargement (9) présente un bord (12) sensiblement rectiligne du côté éloigné de son axe de pivotement (10).

6. Appareil selon la revendication 5, **caractérisé par le fait que** ledit bord (12) sensiblement rectiligne de l'unité de chargement (9) peut être amené à une position proche du sol (13).

7. Appareil selon l'une quelconque des revendications précédentes, **caractérisé par** la présence d'une paroi de guidage (15) qui se rattache à au moins une partie du bord inférieur arqué précité (17) de l'orifice, sachant que la configuration d'au moins une partie de ladite paroi de guidage (15) correspond, pour l'essentiel, à au moins une partie du trajet sur lequel ledit bord arqué (14) de l'unité de chargement (9) accomplit un mouvement au cours de son pivotement.

8. Appareil selon l'une quelconque des revendications précédentes, **caractérisé par le fait que** l'unité de chargement (9) pivote autour d'un axe de pivotement (10) occupant une position proche du fond de la chambre de mélange (1).

9. Appareil selon l'une quelconque des revendications 1-7, **caractérisé par le fait que** l'unité de chargement (9) pivote autour d'un axe de pivotement (10) qui coupe sensiblement le bord inférieur arqué précité (17) de l'orifice.

10. Appareil selon la revendication 9, **caractérisé par le fait que** l'axe de pivotement (10) coupe le bord inférieur (14) à proximité de la partie dudit bord inférieur (14) qui est située le plus à l'extérieur observée depuis la chambre de mélange (1).

11. Appareil selon la revendication 9, **caractérisé par le fait que** l'axe de pivotement (10) coupe ledit bord inférieur (14) à proximité de deux emplacements distants, sur le bord inférieur arqué (17), l'unité de chargement (9) étant pourvue, entre lesdits emplacements, d'une paroi de guidage (15) dont la configuration correspond au moins partiellement à au moins une partie du trajet sur lequel la partie du bord inférieur (17), interposée entre les deux emplacements précités, se meut par rapport à l'unité de chargement (9).

12. Procédé de mélange et de dispersion de fourrage dans une chambre de mélange (1) comprenant une ou plusieurs unité(s) de mélange (5) pouvant tourner autour d'axes (6) sensiblement verticaux, et une paroi latérale (2) qui est au moins partiellement curviligne observée en coupe transversale horizontale, laquelle paroi latérale (2) est munie d'un orifice ; procédé dans lequel la matière à mélanger est introduite dans la chambre de mélange (1) à travers ledit orifice, en imprimant un pivotement à une unité de chargement (9) entre une première position proche du sol (13) sur lequel l'appareil est disposé, et une seconde position dans laquelle l'unité de chargement (9) obture au moins partiellement l'orifice ; dans lequel ledit orifice possède un bord inférieur arqué (14) ; et dans lequel ladite unité de chargement (9) est dotée d'un bord arqué. (14) correspondant, sensiblement contigu audit bord inférieur (17) de l'orifice dans ladite seconde position.

13. Procédé selon la revendication 12, **caractérisé par le fait que** l'appareil est équipé de roues et/ou de moyens pour atteler ledit appareil à un tracteur ; procédé dans lequel l'unité de chargement (9) pivote autour d'un axe de pivotement (10) s'étendant, pour l'essentiel, transversalement par rapport à la direction de mouvement dudit appareil ; dans lequel ledit appareil est animé d'un mouvement rétrograde jusqu'à une position proche d'un stock de matière devant être mélangée ; et dans lequel l'unité de chargement (9), possédant un bord (12) sensiblement rectiligne, est animée d'un pivotement de telle sorte que ledit bord (12) soit positionné à proximité du sol (13).

14. Procédé selon la revendication 12 ou 13, **caractérisé par le fait que** l'unité de chargement (9) est déplacée le long d'une paroi de guidage (15), par son bord arqué (14), au cours dudit mouvement pivotant, laquelle paroi de guidage (15) se rattache à au moins une partie du bord inférieur arqué précité (17) de l'orifice.

15. Procédé selon l'une quelconque des revendications 12-14, **caractérisé par le fait que** l'unité de chargement (9) est animée d'un pivotement autour d'un axe de pivotement (10) occupant une position proche du côté inférieur de la chambre de mélange (1).
